(19) Europäisches Patentamt

European Patent Office

Office européen des brevets

(11) **EP 1 087 611 A2**

(12) **EUROPEAN PATENT APPLICATION**

(43) Date of publication:
28.03.2001 Bulletin 2001/13

(51) Int. Cl.[7]: **H04N 1/32**, H04N 1/00

(21) Application number: 00203228.2

(22) Date of filing: 18.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 27.09.1999 US 405590

(71) Applicant: **EASTMAN KODAK COMPANY**
**Rochester, New York 14650 (US)**

(72) Inventors:
• **Wen, Xin,**
  **Eastman Kodak Company**
  **Rochester, New York 14650-2201 (US)**
• **Honsinger, Chris W.,**
  **Eastman Kodak Company**
  **Rochester, New York 14650-2201 (US)**

(74) Representative:
**Lewandowsky, Klaus, Dipl.-Ing. et al**
**Kodak Aktiengesellschaft,**
**Patentabteilung**
**70323 Stuttgart (DE)**

(54) **Embedding information in a printed image**

(57)    Apparatus for controlling a printer to print an image on a receiver which includes invisible embedded information in response to a printing property and information to be embedded into the image is disclosed. The apparatus stores a digital image, the printing property, and the information associated with the image and to be embedded in the image. In response to the stored printing property, the stored associated information, and the digital image, the apparatus modifies a predetermined number of pixel values with the associated information in the stored digital image so that the associated information is embedded in the stored digital image. Signals are produced which control the printer to produce the image on the receiver in accordance with the modified digital image wherein the embedded information is invisible and can subsequently be extracted.

FIG. 1

**Description**

This invention relates to embedding information in digital mages developed from photographic film to be printed by a digital printer.

Photography is a popular method for people to record and remember their memories of past experiences. Photographic images can be captured by a photographic film or a solid state image sensor. Film-based photography is an analog process. An optical system forms an image of a scene on a film coated with a photosensitive material, most commonly silver halide emulsion grains. The exposure to photons activates a photochemical process in the silver halide emulsion grains, producing a latent image of the scene on the film. A latent image carries the information of the scene image, but it is not visible to human eyes. Subsequent development of the film containing the latent image can produce a visible image formed by dye molecules. The dye image on the photographic film can then be reproduced on a photographic paper.

The exposed photographic films can be developed either in a central location, typically referred as a Central Lab, or a distributed site, which can be called as either a Minilab or a Microlab depending on the size and the throughput of the site. The traditional development and printing processes of the silver halide films, as described above, all involve wet chemical and analog processes. With the advancement of computer and imaging technologies in recent years, a demand has been created to provide users digital photographic services. By using digital methods, photographic images can be more readily received from and provided to users in various digital formats. The digital images can also be printed on receivers by a digital printer such as an ink jet printer, a thermal dye diffusion printer, and a digital silver halide printer.

One problem that has arisen from the usage of digital images is the detection of the unauthorized use of copyrighted or personal images. It is known that the professional photographers have been greatly concerned about the illegitimate use of their copyrighted images in the recent years. As the use of Internet and digital imaging devices become more popular, this concern are increasingly shared by the common consumers.

An object of the present invention is to provide high quality images on a receiver having embedded information that is invisible but can be extracted.

Another object of the present invention is to provide an image on a receiver having embedded information in response to a digital image that is digitized from a developed photographic film.

These objects are achieved by apparatus for controlling a printer to print an image on a receiver which includes invisible embedded information in response to a printing property and information to be embedded into the image, comprising

a) means for storing a digital image;
b) means for storing the printing property;
c) input means for storing the information associated with the image and to be embedded in the image;
d) means responsive to the stored printing property, the stored associated information, and the digital image for modifying a predetermined number of pixel values with the associated information in the stored digital image so that the associated information is embedded in the stored digital image; and
e) means for producing signals which control the printer to produce the image on the receiver in accordance with the modified digital image wherein the embedded information is invisible and can subsequently be extracted.

A feature of the present invention is that the information embedding is particularly suitable for use in existing photographic processes such as provided by Microlabs, Minilabs and Central Labs.

An advantage of the present invention is that the high quality of the photographic images on the films can be preserved when the digital image digitized from photographic films is used to print an image on a receiver which includes embedded information

Another advantage of the present invention is that the amount of the information embedded in the printed image is maximized.

Yet another advantage of the present invention is that the reliability of the extracting the embedded information from the printed image is maximized.

A further advantage of the present invention is that the embedded information can be varied according to the user's input, thereby permitting adding personal messages, authenticating information, as well as sound information.

FIG. 1 shows an apparatus for embedding information in a digital images dependent on a printing property and the user input in accordance to the present invention;
FIG. 2 shows the detailed components of the computer of FIG. 1;
FIG. 3 is a flow diagram of the operations of the apparatus of FIG. 1; and
FIG. 4 shows the arrangement in embedding information in accordance with the present invention, including a plurality of scrambled images superimposed over an input digital image.

The present invention relates to apparatus for embedding information in digital images to be printed by a digital printer. One important feature of the present invention is that the information embedding is conducted in response to a printing property and the user input. In the present invention, the term "printing property" includes one or more of the following properties: printing resolution, the number of tone levels per pixel (bit depth), the noise level of the printing method (such as visible grain noise and halftoning noise), the dimensions and the aspect ratio of the digital image. The digital image can be printed in the typical photographic formats: 3R (3.5" x 5"), 4R (4" x 6"), page size (8.5" x 11"), and APS format. For a given width (for example 3.5", 4", 5"), the image length can also vary (for example from 5" to 12") from Classic, to HDTV and Panoramic format.

The printing property can also include properties specific to each printing technologies. For example, for an ink jet printer, the printing property can include the minimum ink drop volume (or ink dot size) that can be produced by the printer, the number of different ink dots volume (or ink dot sizes) ejectable from the ink jet print head, the number of printing passes, the number of inks of different densities per color, the number of ink dots per pixel, the placement variabilities of ink dot placement within and between passes, and along fast and slow scan directions. The variability in the dot size for each nozzle and between nozzles can also be included.

The information is embedded into the digital images according to the printing property so that the high photographic image quality is preserved in the digital images even with the embedded information. The printing property is also used for maximizing the amount and the redundancy (reliability) of the embedded information.

In the present invention, the term "quality" or "image quality" refers to the image properties that define the visual effects of an image and the fidelity of the reproduced image compared to the original image. Such image properties can include grain noise, tone scale, color reproduction, sharpness, the severity of image artifacts, and broadly, the photographic "look and feel", which are well known in the imaging field.

In accordance to the present invention, the more noise a film-based image has, the more data can be embedded into the image without affecting the quality of the image. That means that more data can be embedded in an image developed from a high-speed film than from a lower speed film.

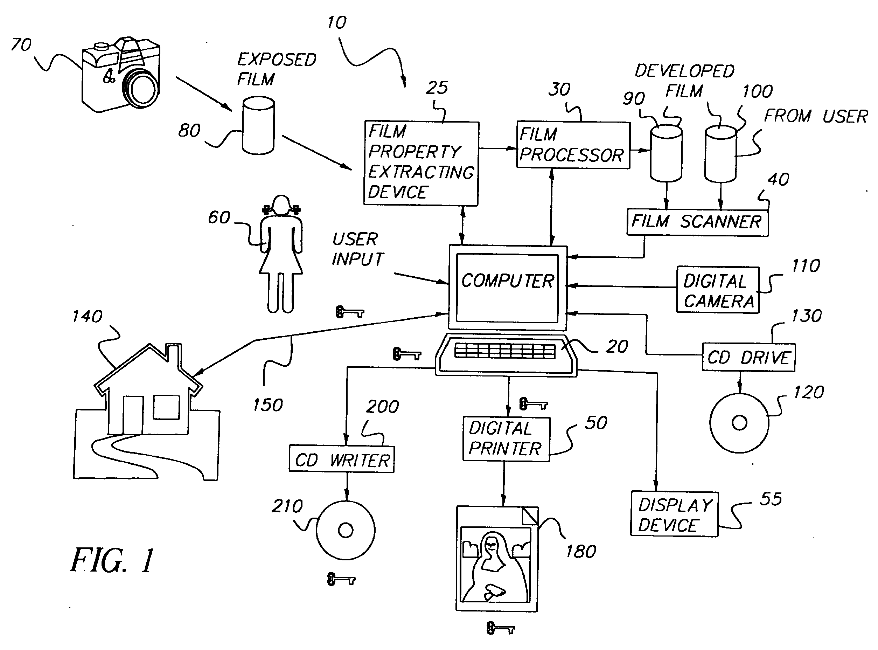

FIG. 1 shows an apparatus 10 in accordance with the present invention. The apparatus 10 includes a computer 20, a film property extraction device 25 for extracting one or more film properties as described above, a film processor 30, a film scanner 40 and a digital printer 50. Although not shown, the apparatus 10 can also include an optical printer for printing photographic images on a photographic paper in a wet chemical process.

The film property that is extracted by the film property extraction device 25 can include one or more of the following properties film speed, film type (for example 35 mm, APS, negative or positive, and black and white), APS format (Classic, panoramic, HDTV), or exposure conditions. The information is embedded into the digital images according to the film property so that the high photographic image quality is preserved in the digital images even with the embedded information.

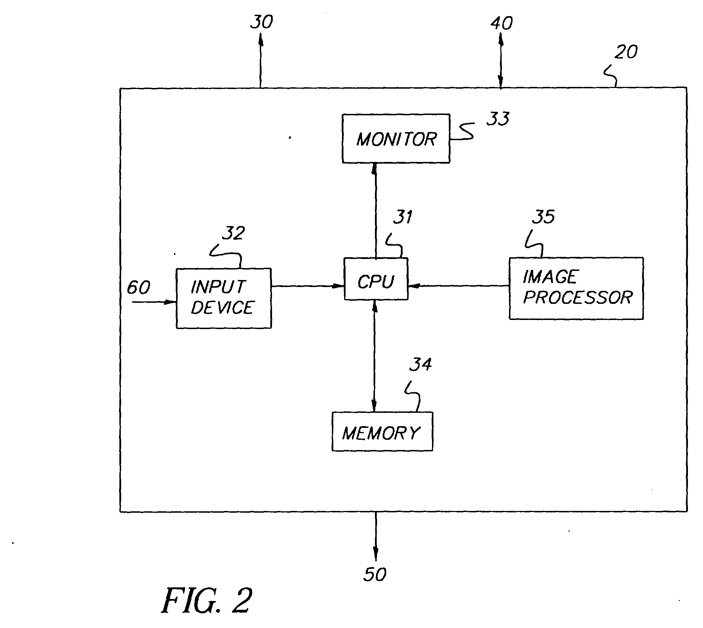

The computer 30, shown in FIG. 2, includes a Central Processing Unit (CPU) 31, input device 32, such as a keyboard, and a mouse that receives user input information from the user 60, a monitor 33 for displaying user input information or authentication images, a memory 34 for storing digital images and user input information, and a image processor 35 for processing the digital images to embed information and conducting other image processing operations well known in the art.

Referring again to FIG. 1, a camera 70 records latent images of scenes, as described above. In the present invention, the term "scene" refers to any object that can be captured as an image on a photographic film. The film carrying the latent images is typically contained in a light sealed exposed film cassette 80 that is received by the film processor 30.

As it well known in the photographic field, the film processor 30 processes the film carrying the latent images in the exposed film cassette 80 in a wet chemical process. The exposed film is sequentially processed in several processing solutions: a developer solution, a bleach solution, a fixer solution, a washing solution, or a combination of bleach/fix solution and wash/stabilizer solution. Finally, the developed film is dried in a drying box. In the present invention, the film processor 30 can also use a dry process in which the digital images can directly scanned from the films. The developed films 90 and 100 are sent to the film scanner 40 or an optical printer (not shown) for printing on a photographic paper

The film scanner 40 scans the developed films 90 and 100 in a pixel-wise fashion. The optical densities of the analog photographic image are read at each pixel location, producing a digital image file. The digital image is a representation of its analog images on the developed film 90 and 100 and can be conveniently stored on the electronic memory 34. Digital images can be easily transferred and shared over the modern information channels such as the Internet. After embedded with information, as described below, the modified digital image is printed on a receiver by the digital printer 50 to produce a photographic image. The digital printer 50 can be an ink jet printer such as an Epson Stylus Photo 750 printer or a HP PhotoSmart printer. The digital printer 50 can also be an electrophotographic printer, a digital silver halide printer, or a thermal dye diffusion printer (also called thermal dye sublimation) such as the Kodak XLS 8600 printer. Although not shown a second scanner can be included for digitizing images on a receiver. The digital image can also be provided by a digital camera 110, or a optical disk 120 such as Kodak's Picture CD or Kodak's Photo CD that is read by a CD drive 130.

The image processor 35 in the computer 20 then processes the digital images and embeds information into the digital images obtained by the film scanner 40. In the present invention, the embedded information is typically information associated with the image. In FIG. 1, different types of embedded information are represented by a "key" symbol. For example, the authentication information can be used to deter counterfeiting and illegitimate use.

The embedded information can include authentication information, the information selected by the user, and the sound information. The authentication information can include a watermark, copyright, and the name of the user or the photographer. In the present invention, the term "user input information" refers to the information selected or produced by the user 60 and input to the computer 30. The user input information can include the user's identification, the time, location, occasion of scene and so forth. The embedded information can also include sound information such as voice and music. The sound information can be recorded at the scene of the image capture or at the Microlab or Minilab, or can also be retrieved from a memory 34.

The embedded information can be input to the computer 20 at the Microlab, Minilab or the Central Lab; it can also be produced or input from a remote location 140 such as a house through an information channel 150 such as the Internet. In FIG. 1, the "key" symbol next to the information channel 150 represents that the embedded information can be transferred in a secure fashion.

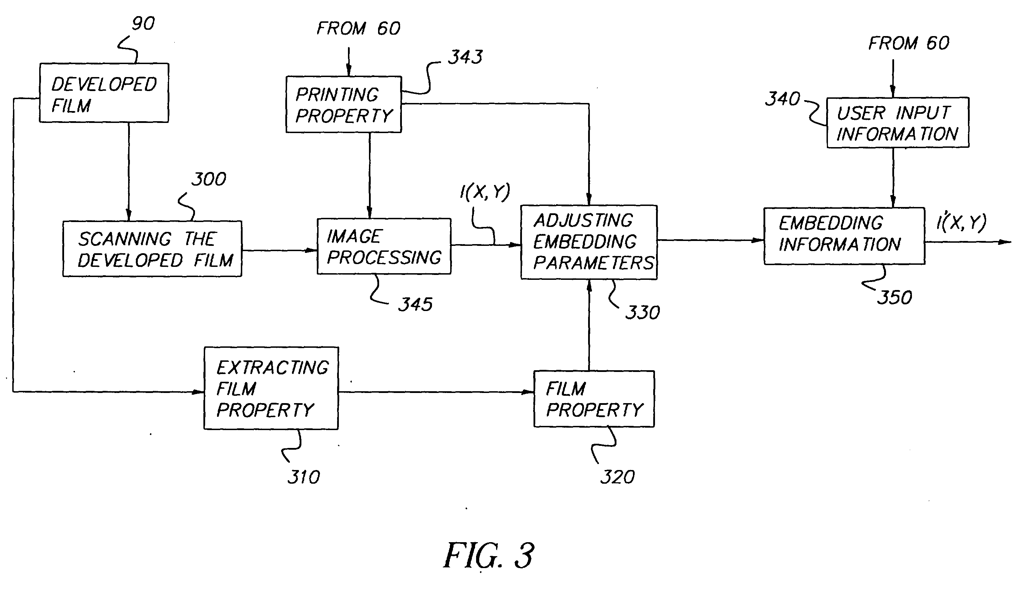

FIG. 3 illustrates the flow chart of the operations of the apparatus in accordance with the present invention. The developed film in the developed film cassette 90 is scanned in box 300 to produce a digital image. The film properties are extracted by the film property extraction device 25 in box 310, which produces film property in box 320. The film property 320 can be extracted from the magnetic coating layer on the APS film before the development of the exposed photographic film, or from the optical coding on the non-image areas of the photographic film after it is developed. The extracted film properties are stored in the memory 34 in the computer 20, which is accessible by the image processor 35 for adjusting embedding parameters in box 330.

The printing property is produced in box 343. As described previously, the printing property includes one or more of the following properties: printing resolution, the number of tone levels per pixel (bit depth), the noise level of the printing method (such as visible grain noise and halftoning noise), the dimensions and the aspect ratio of the digital image. The digital image can be printed in the typical photographic formats: 3R (3.5" x 5"), 4R (4" x 6"), page size (8.5" x 11"), APS format, or a poster size (for example 3' x 4'). For a given width (for example 3.5", 4", 5"), the image length can also vary (for example from 5" to 12") from Classic, to HDTV and Panoramic format. The printing property can also include printing parameters specific to each printing technique.

The printing information such as printing format can be input or selected by the user 60 as part of the user's request for the printing job. For example, the user 60 typically defines the format size (for example 4R, page size, or poster size) of printed image 180. Many of the printing properties 343 related to the digital printer 50 are stored in the memory 34 and can be automatically retrieved to be used for adjusting embedding parameters in box 330. These can include printing mode parameters such as printing resolutions, the number of colorants (YMCK, YMC, or YMM'CC'K where M' and C' represent light magenta and light cyan colors), and the number of printing passes.

The image is processed in box 345 in responsive to the stored printing property in box 343 to produce a processed digital image I(x,y). The image processing 345 includes the scaling of the digital image to the proper image sizes and the aspect ratios as required by the format of the printed image 180 and the digital printer 50. The image processing 345 also includes tone scale calibration, color mapping, halftoning, and other image processing for printing a digital image well known in the printing art. Depending on the specific printing system, certain image processing operations can also be conducted after or in conjunction with embedding information in box 350.

The parameters for embedding information in the processed digital image I(x,y) are adjusted in box 330 according to both the printing property 343 and the film property 320.

In accordance to the present invention, the embedding parameters include the amplitude of the embedding information, the redundancy of the embedded information, the amount of the information in the number of bits to be embedded. The embedding parameters are adjusted in box 330 in accordance with the printing properties in box 343 for optimizing the image quality of the printed image 180 with the embedded information as well as for optimizing the extraction reliability of the embedded information by improved redundancy in the embedded information.

The user 60 produces or selects information in box 340. The information to be embedded is stored in memory 34. In box 350, the user input information is embedded to the processed digital image I(x,y) using the adjusted embedding parameters to produce a modified digital image I'(x,y) that carries the embedded information. The information is embedded into the processed digital image I(x,y) using the embedding parameters adjusted in box 330 depending on the printing property 320 so that the high image quality in the processed digital image I(x,y) (derived from the photographic film) is preserved in the modified digital image I'(x,y) with the embedded information. The printing property 343 is also used for maximizing the amount and the reliability of the embedded information.

The computer 20 sends signals to the digital printer 50 according to the modified digital image I'(x,y). The signals are used to control the amount of colorant to be transferred at each pixel on a receiver to produce a printed image 180.

The information embedding is now described to illustrate the dependence of the embedding parameters on the printing parameters in accordance with the present invention. In box 350, the information such as the user input information is embedded into the processed digital images I(x,y) by modifying a predetermined number of pixel values in the processed digital image I(x,y), thus producing a modified digital image I'(x,y). The information embedding is determined by at least one printing property 343 stored in the memory 34 in the computer 20.

The user input information 340 is first used to produce a message image M(x,y). The message image M(x,y), for example, can include alphanumeric or graphic information associated with the input digital image (scanned from the photographic film and/or input from the user 60). A carrier image C(x,y) is also generated with a uniform or flat Fourier amplitude spectrum and a phase spectrum generated using a random number generator for each phase component. The random phase is required to distribute the message image to make the message invisible and unreadable to human eyes.

The message image M(x,y) and the carrier image C(x,y) are then convolved to form a scrambled signal S(x,y).

$$S(x,y) = M(x,y) * C(x,y) \qquad (1)$$

In eqn. (1), the symbol "*" denotes the mathematical operation of convolution. In particular, a circular convolution can be efficiently performed in either space domain (image domain) or Fourier frequency domain representations for the present invention (see "Digital Signal Processing" by Alan V. Oppenheim and Ronald W. Schafer, Prentice-Hall, Inc., 1975, pp-101-115).

The scrambled signal S(x,y) is next added to the digital image I(x,y) to produce a modified digital image I'(x,y) carrying the emebedded information:

$$I'(x,y) = I(x,y) + \alpha S(x,y) \qquad (2)$$

The scrambled signal S(x,y) is scaled by a scale factor $\alpha$ to maximize the signal of the embedded information while ensuring the invisibility of the scrambled message in the modified digital image I'(x,y). That is, the value of $\alpha$ is chosen in such a way that the maximum amplitude of the embedded signal does not exceed a pre-specified visibility threshold. Specifically, as described below, the value of $\alpha$ is determined by the printing parameters such as the bit-depth and the grain noise in the printed image 180 without the embedded information.

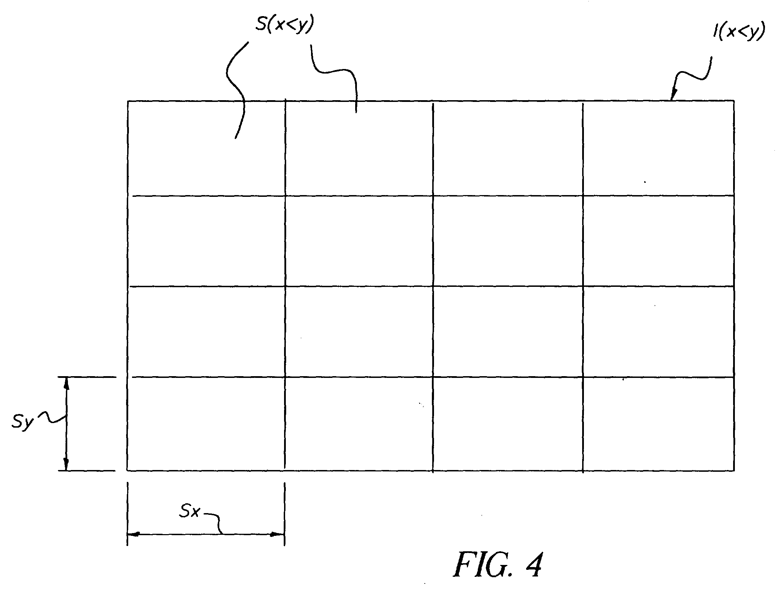

To improve the reliability of the extraction of the embedded information, as shown in FIG. 4, a plurality of blocks of scrambled signals S(x,y) can be superimposed to each processed digital image I(x,y) in one color plane. Each block of S(x,y) is defined by Sx, the number of pixels along the x dimension and Sy, the number of pixels along the y dimension. The redundancy in the scrambled signals S(x,y) increases the signal-to-noise ratio in the extraction of embedded information from the printed image 180. In case a part of the printed image 180 is damaged of torn off, the redundancy of the scrambled signals also ensures the embedded information can be extracted from just a small portion of the printed image 180.

In accordance to the present invention, the number and the dimensions (Sx and Sy) of the scrambled signal S(x,y) to be embedded to a processed digital image I(x,y) are all dependent on the dimensions and the dpi of the printed image. In the image processing of box 345, the digital image scanned from the developed photographic film is scaled to the correct number of pixels for printing so that the correct format sizes are obtained in the printed image 180 at the printing resolution (dpi) of the digital printer 50. Ideally, the processed digital image can be superimposed with an integer number of blocks of scrambled signals along each of the x and y dimensions. For example, if a printed image 180 is to be printed at 600 dpi resolution by the digital printer 50 to produce a 4R (4" x 6") format size, the processed image I(x,y) is 2400 pixels x 3600 pixels by size. The arrangement of 4 x 4 scrambled signal blocks, as shown in FIG. 4, thus requires 600 pixels x 900 pixels in each block. A pattern of 10 x 10 blocks of scrambled signals implies 240 pixels x 360 pixels in each block. In summary, the number and the size of the scrambled signal blocks (that is embedding parameters) are dependent on the format size of the printed image 180 (that is printing property).

In accordance to the present invention, the amplitude (that is $\alpha$) and the redundancy (that is the number of blocks) of the embedding information can be co-optimized according to the printing property. We found an empirical relationship between the amplitude and the redundancy of the information embedding:

$$\alpha = \beta\ N\ MB\ /\ (Sx\ Sy\ C) \qquad (3)$$

where $\beta$ is a constant that is experimentally calibrated for each specific printing technique, MB is the amount of the message information to be embedded in number of bits, and C is the number of color planes available in I(x,y) for the embedding information. N is a measure of the noise level of the printed image. In the simplest case, N can be presented by the granularity, which can be measured analytically by techniques well known in the field of imaging, or by the Fourier spectrum of the optical density distribution in an uniformly printed image. N decreases with the increase of the tone levels per pixel (that is higher bit depth). N is also dependent on printing techniques. For example, the noise level is dependent on the type of halftoning (or multitoning) techniques used in the image processing (box 345). The typical halftoning techniques are error diffusion and blue noise dithering. In an ink jet image N are also dependent on the visible noise of the individual or clusters of ink dots as well as the placement errors of ink dots in an ink jet image.

One preferred criterion for the amplitude $\alpha$ is that the noise from embedding information is lower than the visible noise of the printed image without embedding. This criterion ensures the original quality of the image is preserved even with the information embedding (for example, the photographic quality of the images scanned from the photographic films). The perception of the noise produced by information embedding is experimentally calibrated by printing test images including different patterns and optical densities. Once the calibration is done for a printing mode of the digital printer 50, the constant $\beta$ is determined; the maximum for the amplitude $\alpha$ can be calculated using Eqn. (3).

In addition to the experimental calibration, the visual impact of noise from the embedding information can also be simulated by a computer model of the human visual system (HVS). A practical and well-known model is the contrast sensitivity function (CSF), which relates to the signal contrast that is required for detection as a function of spatial frequency, noise, and other parameters. A basic description of the CSF can be found in chapter five of "*Foundations of Vision*," by Brian A. Wandell, Sinauer Associates, Inc., Sunderland, MA, 1995. This refererence also includes CSF plots based on measured sensitivities. A number of CSF models have been described in the literature, and in a preferred embodiment of the present invention, specific use is made of a model described by Daly in "*Application of a noise-adaptive contrast sensitivity function to image data compression*," Optical Engineering, Volume 29, number 8, pages 978-987, August 1990. This CSF model shares characteristics similar to the experimentally measured data, for example, the sensitivity decreases as an increasing function of both horizontal and vertical spatial frequency and background noise level. The exact form of the CSF derived from this model is dependent upon a number of viewing condition parameters, including viewing distance, adaptation light level, noise level, wavelength, and chromatic channel. By adjusting the amplitude $\alpha$ of the embedded signal in accordance with the CSF, we can maximize the amount and the quality of information embedded.

Examples of the optimization and adjusting of embedding information are now described. It is assumed that the noise behavior N is given by the digital printer 50 and the constant $\beta$ is calibrated using the procedure described above.

   a) If a certain amount of redundancy is required for the embedded information, for example a minimum of 12 blocks of scrambled signals, the algorithm in the block 330 of FIG. 3 calculates the optimal Sx and Sy using the format size of the printed image 180. The amplitude $\alpha$ is then automatically calculated using the Eqn. (3) with the input from the amount information of MB to be embedded.

   b) If the preferred amplitude $\alpha$ and the redundancy are fixed, the maximum amount of information MB that can be embedded is calculated, which can be used as a feedback to the user 60 or the user input information 340 as the limit for the information embedded for each printing mode.

The adjustment of embedding parameters according to printing property can be generally applied to other techniques of information embedding in images. Examples of these art include commonly-assigned US-A-5,859,920; US-A-5,835,639 and US-A-5,710,834, the disclosures of which are incorporated herein.

Other features of the invention are included below.

The apparatus wherein the printer is a digital silver halide printer.

The apparatus wherein the printer is a thermal dye diffusion printer.

The apparatus wherein the modifying means modifies the predetermined number of pixel values with the associated information in the digital image so that the reliability of the extracting the embedded information from the printed image is maximized.

The apparatus wherein the redundancy of the modification of the predetermined number of the pixel values is varied so that the reliability of the extracting the embedded information from the printed image is maximized.

The apparatus wherein the modifying means modifies the predetermined number of pixel values with the associated information in the digital image so that the amount of the information embedded in the printed image is maximized.

The apparatus wherein the amplitude of the modification of the predetermined number of the pixel values is varied so that the amount of the information embedded in the printed image is maximized.

The apparatus wherein the modified pixels in the digital image do not substantially alter the quality of the digital image.

The apparatus wherein the printing property is input or selected by the user.

The apparatus wherein the embedded information includes authentication information.

The apparatus wherein the embedded information includes user input information.

The apparatus wherein the embedded information includes sound information.

The apparatus wherein the printing property includes one or more of the following: printing resolution, the number of tone levels per pixel, the noise level of the printing method, the dimensions and aspect ratios of the image to be printed.

The apparatus wherein the printer is an ink jet printer.

The apparatus wherein the printer is a digital silver halide printer.

The apparatus wherein the printer is a thermal dye diffusion printer.

The apparatus wherein the modifying means modifies the predetermined number of pixel values with the associated information in the digital image so that the reliability of the extracting the embedded information from the printed image is maximized.

The apparatus wherein the redundancy of the modification of the predetermined number of the pixel values is varied so that the reliability of the extracting the embedded information from the printed image is maximized.

The apparatus wherein the modifying means modifies the predetermined number of pixel values with the associated information in the digital image so that the amount of the information embedded in the printed image is maximized.

The apparatus wherein the amplitude of the modification of the predetermined number of the pixel values is varied so that the amount of the information embedded in the printed image is maximized.

Apparatus for producing a digital image from a developed photographic film and for controlling a printer to print an image on a receiver which includes invisible embedded information in response to a printing property and information to be embedded into the image, comprising

a) a scanner for scanning the image on the developed photographic film to produce the digital image;
b) means for storing a digital image;
c) means for storing the printing property;
d) input means for storing the information associated with the image and to be embedded in the image;
e) processing means responsive to the stored printing property, the stored associated information, and the digital image for processing the digital image and embedding the associated information, including:

i) means responsive to the stored printing property for processing the digital image;
ii) means responsive to the stored associated information for modifying a predetermined number of pixel values with the associated information in the processed digital image so that the associated information is embedded in the processed digital image; and

f) means for producing signals which control the printer to produce the image on the receiver in accordance with the modified digital image wherein the embedded information is invisible and can subsequently be extracted.

**PARTS LIST**

| | |
|---|---|
| 10 | apparatus |
| 20 | computer |
| 25 | film property extraction device |
| 30 | film processor |
| 31 | CPU |
| 32 | input device |
| 33 | monitor |
| 34 | memory |
| 35 | image processor |
| 40 | film writer |
| 50 | digital printer |
| 60 | user |
| 70 | camera |
| 80 | exposed film cassette |
| 90 | developed film cassette |
| 100 | developed film cassette |
| 110 | digital camera |
| 120 | compact disk |
| 130 | CD drive |
| 140 | remote location |
| 150 | information channel |
| 180 | printed image |
| 200 | CD writer |
| 210 | optical CD |
| 300 | scanning the developed film |
| 310 | extracting film property |
| 320 | film property |
| 330 | adjusting embedding parameters |
| 340 | user input |
| 343 | printing property |
| 345 | image processing |
| 350 | embedding information |

**Claims**

1. Apparatus for controlling a printer to print an image on a receiver which includes invisible embedded information in response to a printing property and information to be embedded into the image, comprising

a) means for storing a digital image;
b) means for storing the printing property;
c) input means for storing the information associated with the image and to be embedded in the image;
d) means responsive to the stored printing property, the stored associated information, and the digital image for modifying a predetermined number of pixel values with the associated information in the stored digital image so that the associated information is embedded in the stored digital image; and

e) means for producing signals which control the printer to produce the image on the receiver in accordance with the modified digital image wherein the embedded information is invisible and can subsequently be extracted.

2. The apparatus of claim 1 wherein the modified pixels in the digital image do not substantially alter the quality of the digital image.

3. The apparatus of claim 1 wherein the printing property is input or selected by the user.

4. The apparatus of claim 1 wherein the embedded information includes authentication information.

5. The apparatus of claim 1 wherein the embedded information includes user input information.

6. The apparatus of claim 1 wherein the embedded information includes sound information.

7. The apparatus of claim 1 wherein the printing property includes one or more of the following: printing resolution, the number of tone levels per pixel, the noise level of the printing method, the dimensions and aspect ratios of the image to be printed.

8. The apparatus of claim 1 wherein the printer is an ink jet printer.

9. Apparatus for controlling a printer to print an image on a receiver which includes invisible embedded information in response to a printing property and information to be embedded into the image, comprising

   a) means for storing a digital image;
   b) means for storing the printing property;
   c) input means for storing the information associated with the image and to be embedded in the image;
   d) processing means responsive to the stored printing property, the stored associated information, and the digital image for processing the digital image and embedding the associated information, including:

      i) means responsive to the stored printing property for processing the digital image;
      ii) means responsive to the stored associated information for modifying a predetermined number of pixel values with the associated information in the processed digital image so that the associated information is embedded in the processed digital image; and

e) means for producing signals which control the printer to produce the image on the receiver in accordance with the modified digital image wherein the embedded information is invisible and can subsequently be extracted.

10. Apparatus for producing a digital image from a developed photographic film and for controlling a printer to print an image on a receiver which includes invisible embedded information in response to a printing property and information to be embedded into the image, comprising

   a) a scanner for scanning the image on the developed photographic film to produce the digital image;
   b) means for storing a digital image;
   c) means for storing the printing property;
   d) input means for storing the information associated with the image and to be embedded in the image;
   e) means responsive to the stored printing property, the stored associated information, and the digital image for modifying a predetermined number of pixel values with the associated information in the stored digital image so that the associated information is embedded in the stored digital image; and
   f) means for producing signals which control the printer to produce the image on the receiver in accordance with the modified digital image wherein the embedded information is invisible and can subsequently be extracted.

FIG. 1

EP 1 087 611 A2

MONITOR 33

IMAGE PROCESSOR 35

CPU 31

MEMORY 34

INPUT DEVICE 32

20

40

30

50

60

*FIG. 2*

FIG. 3

*FIG. 4*